# EUROPÄISCHE PATENTSCHRIFT

(11) **EP 1 013 070 B1**
(45) Veröffentlichungstag und Bekanntmachung des Hinweises auf die Patenterteilung: **07.05.2003**
(21) Anmeldenummer: 98949978.5
(22) Anmeldetag: 28.08.1998
(51) Int. Cl.: H04N 1/00

(54) **VERFAHREN UND GERÄT ZUR ELEKTRONISCHEN ARCHIVIERUNG EINES COMPUTER-DATENSTROMS**
METHOD AND DEVICE FOR ELECTRONIC ARCHIVING OF A COMPUTER DATA FLOW
PROCEDE ET DISPOSITIF POUR L'ARCHIVAGE ELECTRONIQUE D'UN FLUX DE DONNEES D'ORDINATEUR

(30) Priorität: 29.08.1997 DE 19737811
(43) Veröffentlichungstag der Anmeldung: 28.06.2000
(73) Patentinhaber: Océ Printing Systems GmbH, 85586 Poing (DE)
(72) Erfinder: WEGENER, Harald, D-84149 Velden (DE)
(74) Vertreter: Schaumburg, Thoenes & Thurn
(86) Internationale Anmeldenummer: EP9805460
(87) Internationale Veröffentlichungsnummer: WO99012337

(56) Entgegenhaltungen:
- EP-A- 0 654 746
- DE-A- 4 408 327
- DE-A- 19 515 981
- US-A- 5 140 650

## Beschreibung

Die Erfindung betrifft ein Verfahren und ein Gerät zur elektronischen Archivierung des von einem Computer abgegebenen Datenstroms nach dem Oberbegriff des Patentanspruchs 1.

Ein solches Verfahren und ein solches Gerät sind aus der DE-4408327 A1 bekannt. In Computern erzeugte Dokumente, die sowohl grafische als auch numerische und alphanumerische Informationen enthalten, werden dabei über eine Schnittstelle, beispielsweise eine Standard-Druckerschnittstelle, an ein Archivierungssystem übertragen. Innerhalb des Archivierungssystems werden die zu den Dokumenten gehörenden Daten auf Massenspeichern wie Magnetbändern, magnetischen oder optischen Speicherplatten oder dergleichen langfristig aufbewahrt. Diese Art der Speicherung ersetzt in zunehmendem Maße ältere Verfahrensweisen, bei denen auf Papier vorliegende Dokumente bzw. Originale mit einem optischen Abtaster (Scanner) erfaßt, das so erhaltene Bild in elektrische Signale umgewandelt wurden und dann in Archiven abgelegt wurden. Die früher übliche Microverfilmung von Dokumenten wird durch diese neue Technik in zunehmendem Maße ersetzt, wenn die Originale bereits in Form von elektronischen Signalen bzw. Computer-Datenströmen vorliegen.

Elektronische Archivierungssysteme der eingangs genannten Art setzen einen vom Computer ausgegebenen Datenstrom in der Regel in einen Datenstrom mit spezifischem, an das Archiv angepaßten Datenformat um. In vielen Anwendungsfällen ist der Datenstrom des Computers an bestimmte Ausgabesysteme, insbesondere an Drucker, angepaßt. Beispiele solcher Druckdatenströme sind das von IBM geprägte Format IPDS oder das von Hewlett Packard geprägte Datenformat PCL.

Ein Archivierungssystem setzt diese Datenströme auf ein Format um, welches dem Archivierungssystem entspricht. Die direkte Speicherung der vom Computersystem abgegebenen Daten erweist sich dabei als sehr nachteilig, weil dabei eine sehr große Anzahl an Systemparametern, z.B. Zeichenfonts, mit abgespeichert werden müßte. Auch die Reproduktion derart abgespeicherter Daten würde sich dann als sehr aufwendig erweisen. Archivierungssysteme speichern die Daten deshalb auf einer Pixel-orientierten Basis, z.B. im sog. TIF-Format, ab. Durch eine derartige, punktweise aufgebaute Speicherungstechnik eröffnet sich dann die Möglichkeit, das Datenvolumen nach gängigen Komprimierungsverfahren zu verringern. Das Datenvolumen derart komprimierter Daten ist um so größer, je mehr schwarz-weiß Übergänge zu verarbeiten sind. Andererseits werden Druckseiten in zunehmendem Maße optisch immer aufwendiger gestaltet. Beispielsweise werden auf Formularen immer häufiger Grauraster hinterlegt, um diese optisch ansprechender zu gestalten und Hervorhebungen besser kenntlich zu machen. Diese Entwicklung hat zur Folge, daß bei der Archivierung Druckseiten einen immer größeren Speicherbedarf haben.

In einem anderen, bekannten System, dem sog. COLD-System, werden Daten zur Archivierung getrennt als überwiegend grafische Daten und als überwiegend kodierte Daten (Zeilendaten) abgelegt. Bei erweiterten COLD-Verfahren werden Rohdaten und Ressourcen ebenfalls getrennt abgelegt und bei der Reproduktion wird der gesamte Druckprozess nachgebildet. Dies bedingt eine komplexe Resourcen-Verwaltung.

Aus der DE 195 15 981 A1 ist ein Verfahren zum Erfassen manuell beschriebener Belege bekannt, bei dem die Belege gescannt und anschließend unter Ausblendung von Vordruckinformationen an Bildschirmen weiterbearbeitet werden. Da die Vordruckinformationen bei der Weiterverarbeitung nicht mehr verfügbar sind, eignet sich dieses Verfahren nur dann, wenn die auf der Vorlage abgedruckten Informationen zum Zeitpunkt der Weiterverarbeitung noch bekannt bzw. verfügbar ist. Für ein langfristiges Archivierungssystem ist dieses Verfahren deshalb kaum geeignet.

In der EP 654 746 A2 ist ein Verfahren zur Archivierung von Formularen beschrieben, das der bereits eingangs erwähnten Verfahrensweise mit optischer Abtastung von Dokumenten entspricht. Dabei werden zunächst blanke Formulare abgetastet (gescannt) und die Daten der blanken Formulare in einem Computer abgelegt. Zu archivierende, ausgefüllte Formulare werden später ebenfalls abgestastet und die dabei gewonnenen mit den gespeicherten Daten der blanken Formulare verglichen. Dabei wird zunächst untersucht, zu welchem blanken Formular das ausgefüllte Formular korrespondiert und dann die variablen, ausgefüllten Daten aus dem ausgefüllten Formular extrahiert. Dann werden die extrahierten Daten zusammen mit einem Verweis auf die Daten der blanken Formulare abgespeichert. In diesem Verfahren müssen die ausgefüllten Formulare bedruckt vorliegen, damit sie abgetastet und archiviert werden können. Zum Vergleichen ist es desweiteren nötig, daß blanke Formulare bereits abgetastet und hinterlegt worden sind, bevor die Archivierung eines ausgefüllten Formulars erfolgen kann.

In der Veröffentlichung Wong, K.Y. et. al., "Document Analysis System", in IBM J. Res. Develop., Vol. 26, No. 6, Nov. 1982, Seiten 647-656 ist ein Verfahren zur Unterscheidung zwischen Textdaten und graphischen Daten beschrieben. Es eignet sich zum manuellen Bearbeiten von gescannten Dokumenten, ist aber für die Archivierung von Druckdaten nicht ohne weiteres einsetzbar.

Aufgabe der Erfindung ist es, ein System zur Archivierung von Computer-Datenströmen bereit zu stellen, bei dem ein hoher Datenkompressionsgrad erzielt werden kann, auch wenn aufwendige grafische Informationen archiviert werden sollen.

Diese Aufgabe wird durch die im Patentanspruch 1 und im Patentanspruch 15 beschriebene Erfindung gelöst. Vorteilhafte Ausführungsformen der Erfindung sind Gegenstand der Unteransprüche.

Die Erfindung beruht auf der Erkenntnis, daß ein Großteil der zu archivierenden Computer-Datenströme, insbesondere an Drucker zugeführte Datenströme, aus zweierlei Datenarten besteht. Einerseits sind in diesen Druckdaten häufig Formulare hinterlegt, die für eine bestimmte Anzahl zusammengehöriger Druckdatensätze, sog. Jobs, in ein und derselben Weise wiederkehren. Andererseits sind diese Formulare mit variablen Daten gefüllt, welche jeweils das Charakteristische eines Dokuments darstellen. Erfindungsgemäß wurde erkannt, daß der durch Formulare hervorgerufene Anteil an komprimiertem Druck-Datenstrom oft denjenigen Anteil überwiegt, der durch die variablen Daten hervorgerufen wird. Erfindungsgemäß werden deshalb diejenigen Daten, die von Formularen stammen, von denjenigen Daten, die variabel sind, getrennt, und die beiden Datenarten jeweils getrennt auf Bit-Map-Basis, insbesondere komprimiert, weiterverarbeitet. Innerhalb des Archivierungssystems werden diese Daten voneinander getrennt abgespeichert und später zum Betrachten wieder zusammengeführt; dies kann insbesondere Pixel-genau erfolgen. Für eine Gruppe zusammengehörender Daten (Job) werden die Daten eines Formulars nur einmal abgelegt. Bei den einzelnen Dokumenten werden die zugehörigen variablen Daten mit dem Formular nur noch in der Weise verknüpft, daß ein Verweis auf den entsprechenden Speicherbereich des Formulars abgelegt wird. Vorteilhaft ist dabei, daß sich die - in der Regel umfangreiche Datenmenge eines Formulars - für jeden Job auf ein einmaliges Abspeichern des Formulars beschränkt. Hierdurch wird eine beträchtliche Speicherplatzeinsparung gegenüber Systemen des Standes der Technik erzielt.

Bei Druckgut mit hoher Auflage, d.h. mit häufig wiederkehrenden, gleichartigen Formularen, wird hierdurch ein hoher Grad an Speicherplatzeinsparung erreicht.

Vorteilhaft ist weiter, - insbesondere gegenüber dem o.g. COLD-Systemen - daß sich die Reproduktion der Daten sehr einfach gestaltet, weil auf Bit-Map-Basis (z.B. TIF-Format) nur ein Viewer zur Reproduktion benötigt wird (selbsttragendes Format).

Als vorteilhaft erweist es sich auch, zusammen mit den Verweisen eine Information abzuspeichern, die ein genaues Zusammenführen der Formulardaten mit den zugehörigen, variablen Daten ermöglicht.

In einer weiteren, vorteilhaften Ausführungsform der Erfindung werden die Formular-Daten je Job, d.h. je zusammenhängendem Datenstrom, nur einmal im Archivspeicher als Bit Map abgespeichert, während die variablen Daten jedes Dokuments des Jobs jeweils einzeln abgespeichert werden.

In einer auf extrem hohen Komprimierungsgrad ausgerichteten Ausführungsform werden die Formulardaten inhaltlich reduziert oder sogar gänzlich unterdrückt. In einem derartigen System würden dann im Archivspeicher nur noch die variablen Daten abgespeichert.

Eine Unterscheidung zwischen Formulardaten und variablen Daten erfolgt vorzugsweise im druckerspezifischen Datenformat, d.h. bevor der Druckdatenstrom bzw. die betroffenen Teile davon in das pixelbasierte Datenformat umgesetzt werden. Dabei ist es insbesondere günstig, Formularindikatoren zur Erkennung von Formular-Daten zu verwenden wie beispielsweise die in IPDS-Druckdatenströmen üblichen Overlay-Daten oder in PCL-Druckdatenströmen Makros, formularspezifische Grafiken wie grau hinterlegte Rechtecke oder dergleichen. Dabei muß nicht zwangsläufig ein gesamtes, einer Seite entsprechendes Formular gesucht und gefunden werden. Erfindungsgemäß kann bereits durch das Erkennen einzelner Formularbestandteile ein hoher Grad an Speicherplatzeinsparung erzielt werden. Auf jeder Seite können mehrere Bestandteile auftreten.

Werden Formularindikatoren verwendet, so kann eine hohe Performance beim Archivieren erreicht werden, weil Formulardaten bzw. ,-strukturen relativ einfach bzw. eindeutig erkennbar sind. Dabei kann es vorteilhaft sein, Formularindikatoren relativ restriktiv einzusetzen, wobei Formulardaten nur dann als solche bezeichnet werden, wenn mit relativ einfachen Beurteilungskriterien sicher ist, daß die entsprechenden auf Pixelbasis umgesetzten Daten pixelgenau übereinstimmen. Zur Perfomancesteigerung während des Archivierungsprozesses kann auch beitragen, wenn für die zu erkennenden Formulardaten eine Mindestgröße vorgesehen ist. Sehr kleine Bildelemente in einem Druckdatenstrom werden dann nicht der Prozedur zur separaten Rasterung und einer Zwischenspeicherung zugeführt sondern gemeinsam mit den variablen Daten gerastert und gespeichert.

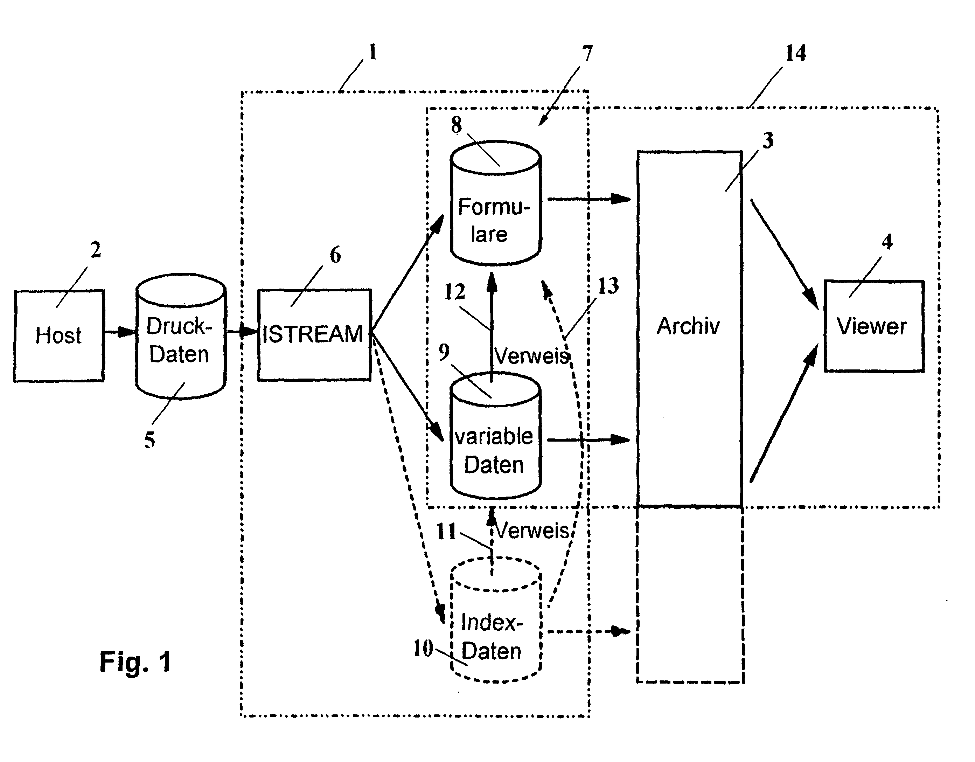

Bei der Suche der Daten in dem Archivspeicher bzw. bei der Rekonstruktion des ursprünglichen Datenstroms können die Formulardaten mit den Inhaltsdaten entweder automatisch überlagert werden anhand von Steuerungssignalen (Fig. 1, Verweis) oder aber variable Daten und Formulardaten getrennt voneinander geladen und vom Bediener gesteuert übereinander gelegt werden.

Im Zuge des Archivierens können neben den variablen Daten und den Formulardaten sog. Index-Daten erzeugt werden, in denen Suchkriterien abgespeichert werden, sowie die Verweisdaten auf die Speicherorte der variablen Daten und gegebenenfalls der Formulardaten.

In einer weiteren, vorteilhaften Ausführungsform der Erfindung erfolgt der Datenübertrag zum Computersystem in das Archivsystem über einen Drucker-Controller, welcher mit einem nachgeschalteten Computer zusammenarbeitet. Der Druck-Controller kann dabei also sowohl zum Erzeugen eines Pixeldatenstroms zur Ansteuerung eines Druckers, als auch zum Erzeugen eines Archiv-Datenstroms verwendet werden. Die beiden Datenstromverbindungen können insbesondere zeitlich parallel erfolgen, wodurch eine hohe Geschwindigkeit des Gesamtprozesses (Drucken und Archivieren) erreichbar ist. Vom Controller zum Computer erfolgt der Datentransfer sowohl für die Formular- und variablen Daten des punktorientierten Datenformats (Bit Map) als auch die im zeichenorientierten (ASCII-Format) Indexdaten über eine gemeinsame Schnittstelle.

Die Verknüpfung, d.h. der Verweis von den variablen Daten zu den Formulardaten, kann innerhalb des variablen Datensatzes hinterlegt werden, innerhalb des entsprechenden Index-Datensatzes oder in beiden Datensätzen.

Weitere Vorteile und Wirkungen der Erfindung werden anhand der nachfolgend beschriebenen Ausführungsbeispiele deutlich, die im Zusammenhang mit zwei Figuren beschrieben werden.

Es zeigen:
**Figur 1:** ein elektronisches Archivierungssystem,
**Figur 2:** elektronische Komponenten des Archivierungssystems,
**Figur 3:** einen Ablauf zum Erkennen und Trennen der verschiedenen Datentypen in einem Druckdatenstrom,
**Figur 4:** einen Ablauf zum Archivieren von getrennt abgespeicherten Daten und
**Figur 5:** einen Ablauf zum Drucken eines vorab getrennten Druckdatenstroms.

Bei dem in Figur 1 dargestellten elektronischen Archivierungssystem wird der von einem Host-Computer 2 abgegebene Datenstrom über eine Archivierungs-Schnittstelle 1 an einen Archiv-Speicher 3 abgegeben. Der Archiv-Speicher 3 kann insbesondere ein Gerät zum Beschreiben von Laser-Speicherplatten sein. Die im Archivspeicher 3 gespeicherten Daten können in dem Bit-Map-basierten Datenformat mit einem Lesegerät (Viewer) 4 abgerufen und beispielsweise wiederum auf einem Computerbildschirm dargestellt werden.

Der vom Host-Computer abgegebene Datenstrom 2 wird über eine Standard-Druckerschnittstelle in einen Controller 6 (ISTREAM) eingespielt. Diese Daten sind in Form sog. Jobs gruppiert. Ein Job ist ein zusammenhängender Datenstrom, der in irgendeiner Weise (logisch oder physikalisch) miteinander verknüpft ist. Innerhalb des Host-Computers kann beispielsweise eine Marke von außen zugeführt werden, die bestimmte Druck-Datenströme miteinander zu einem Job verbindet.

Innerhalb der Archivierungs-Schnittstelle werden die vom Host-Computer gelieferten Daten 5 klassifiziert nach variablen Daten 9 und Formular-Daten 8. Die Formular-Daten (z.B. Overlays) stellen dabei einen fixen Anteil des Jobs dar, der auf mehreren Druckseiten des Jobs unverändert auftritt. Die variablen Daten sind dagegen innerhalb eines Jobs von Druckseite zu Druckseite unterschiedlich.

In der Archivierungs-Schnittstelle werden nunmehr für jeden Job die Formulardaten 8 für jedes Formular nur jeweils einmal hinterlegt, während die variablen Daten seitenweise hinterlegt werden. Gleichzeitig werden Index-Daten erzeugt, die zu den variablen Daten bestimmte Zusatzinformation enthalten, beispielsweise herausgegriffene Ordnungsnummern, Namen, Stichworte oder dergleichen. Die Index-Daten werden im Zuge der weiteren Verarbeitung in Form einer Datenbank weiterverarbeitet und ermöglichen dem späteren Benutzer des Archivs, bestimmte Datensätze wiederzufinden. Die Index-Daten enthalten für alle variablen Datensätze Verweis-Informationen 11, welche die Zuordnung bzw. das Wiederfinden der variablen Daten 9 ermöglichen.

Um alle variablen Daten einer Druckseite auch mit dem zugrundeliegenden Formular-Datensatz 8 zu verbinden, muß ein Verweis zwischen variablen Daten und Formular erfolgen. Dieser kann entweder direkt als Verweis 12 oder indirekt über den Index-Datensatz 10 als indirekter Verweis 13 erfolgen. Zur Sicherheit können auch alle drei Verweisarten 11, 12 und 13 gemeinsam für jede Druckseite hinterlegt werden. Die so erzeugte Datenstruktur 7 wird dann über eine geeignete Verbindung dem Archiv-Speicher 3 zugeführt.

Die Formular-Daten 8 und die variablen Daten 9 sind - genauso wie die Archiv-Daten - innerhalb einer Bit Map-Datendomäne 14, während die Index-Daten in einem kodierten Format, z.B. ASCII vorliegen.

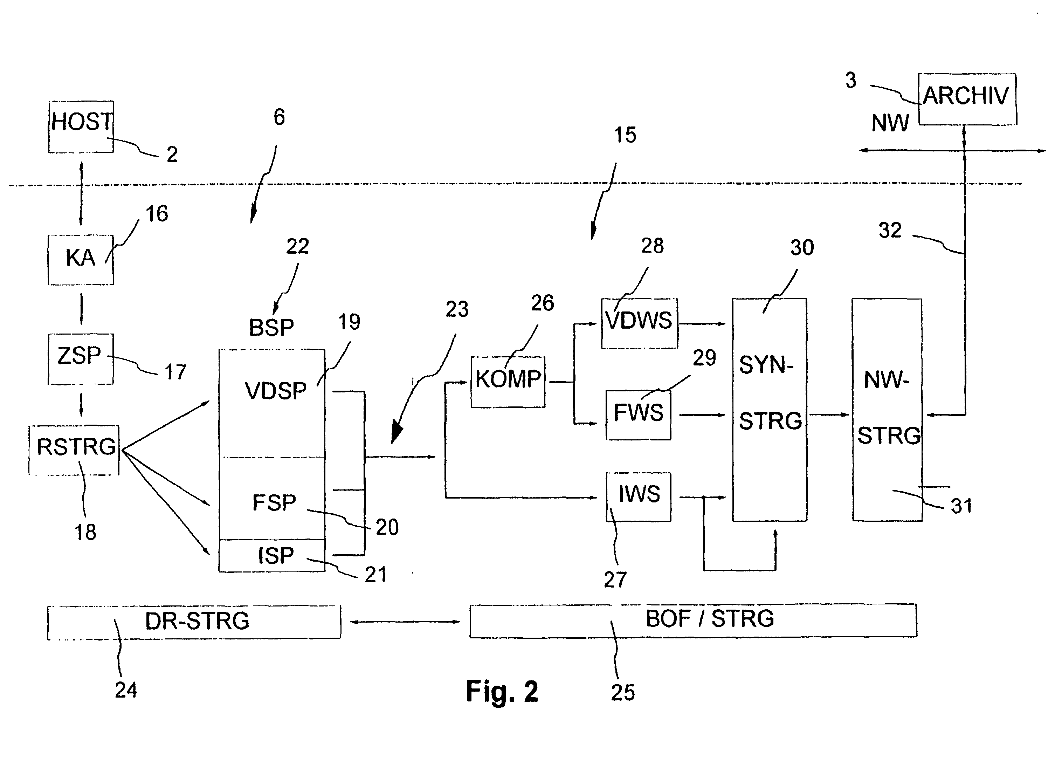

Figur 2 zeigt eine Ausführungsform für eine erfindungsgemäße Archivierungs-Schnittstelle 1. Sie ist unterteilt in einen Drucker-Controller 6 und einen nachgeschalteten Computer 15, welcher beispielsweise ein Personal Computer (PC) sein kann.

Die vom Host-Computer 2 gelieferten Daten werden über einen Kanalanschluß 16 eingespeist. Von diesem werden sie in einem Zwischenspeicher 17 zwischengespeichert. Aus diesem Speicher werden die Daten sukzessive von einer Rastersteuerung 18 entnommen, die die Druckdaten in ein Bit Map Muster umsetzt. Die Rastersteuerung 18 verfügt hierzu über einen nicht näher gezeigten Speicher, welcher Rasterinformationen zur Umsetzung der Druckdatensprache in die entsprechenden Bit Map Informationen enthält. Die Rastersteuerung 18 unterscheidet innerhalb eines zusammengehörenden Druckjobs Formulardaten von variablen Daten. Gleichzeitig produziert sie zu jedem Job einen Index-Datensatz, welcher zur Verwaltung der zu archivierenden Daten dient. Die Rastersteuerung 18 speichert die variablen Daten in einem variablen Datenspeicher 19, die Formulardaten in einem Formulardatenspeicher 20 und die Index-Daten in einem Index-Datenspeicher 21 ab. Diese drei Speicher 19, 20 und 21 sind Bestandteil des flüchtigen Arbeits-Bildspeichers 22, des Controllers 6. Die in den Datenspeicher 19, 20 und 21 erzeugten Daten werden dann über eine gemeinsame Schnittstelle 23 an den nachgeschaltenen Personal Computer 15 übertragen. Den Datentransfer steuert eine Gesamtsteuerung 24 des Controllers 6, welche mit einer Bedienoberfläche und Steuerung 25 des Personal Computers 15 verbunden ist.

Die Rastersteuerung 18 behandelt Formular-Daten und variable Daten unterschiedlich. Für Formulardaten werden eigene Bit Maps im Formularspeicher erzeugt. Für die variablen Daten werden im Speicher 19 Bit Maps erzeugt, die keine Formular-Daten (Overlays) enthalten.

Die Index-Daten, welche im Index-Speicher 21 abgelegt werden, enthalten Verwaltungsinformationen, welche u.a. für jede Seite des Druckjobs die verwendeten Formular-Overlays ablegt. Dabei wird auch der Bezug zwischen variablen Daten und Formular-Daten hergestellt.

Innerhalb des Personal Computers 15 werden die aus dem Speicher für variable Daten 19 und dem Speicher für Formulardaten 20 stammenden Daten in einer Komprimierungsstufe 26 komprimiert. Die Index-Daten werden vorzugsweise ohne Kompression in einer Index-Warteschlange 27 zwischengespeichert, bis sowohl variable als auch Formulardaten die Komprimierung durchlaufen haben. Im Anschluß an die Komprimierungsstufe 26 sind zwei parallel geschaltete Warteschlangen 28, 29 für die variablen Daten und für die Formular-Daten vorgesehen, in denen die entsprechenden Daten so lange zwischengespeichert werden, bis die zugehörigen übrigen Daten die Komprimierungsstufe ebenfalls durchlaufen haben.

Die in den Warteschlangen 27, 28 und 29 befindlichen Daten werden dann von einer Synchronisierungsstufe 30 gemeinsam entnommen und über eine Netzwerksteuerung 31 zur Ausgabeschnittstelle 32 in Richtung zum Archivspeicher 3 abgegeben.

In einer weiteren vorteilhaften Ausführungsform können alle Verarbeitungseinheiten des Personal-Computers 15 auch in dem Drucker-Controller integriert sein.

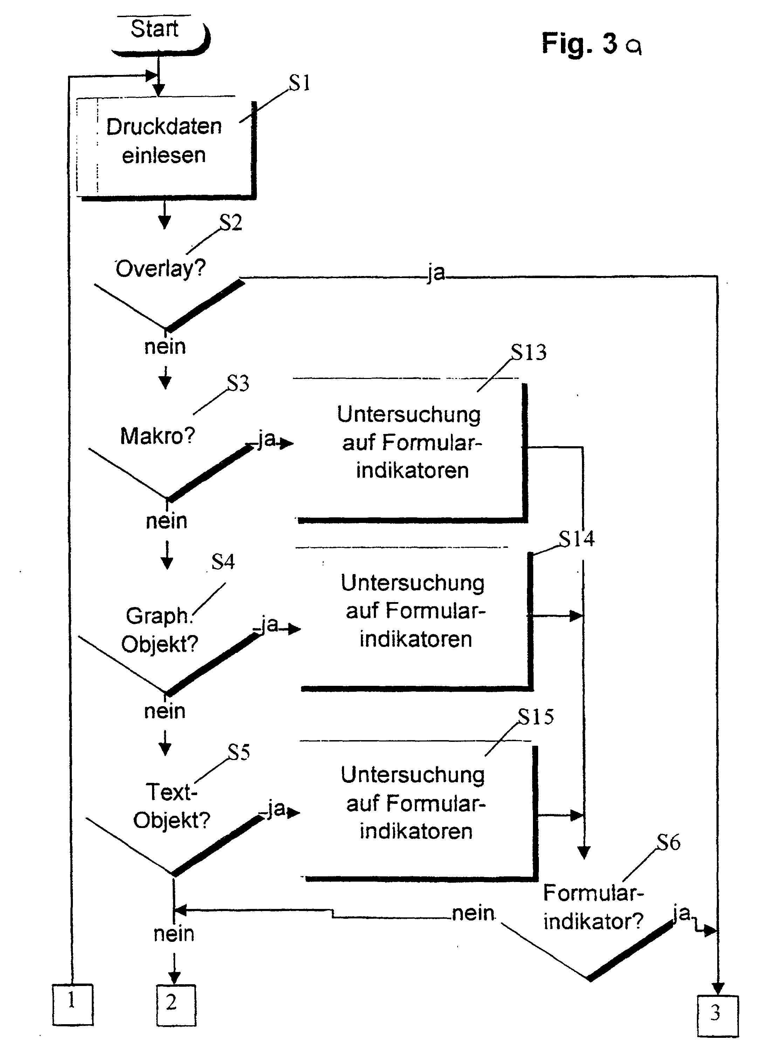

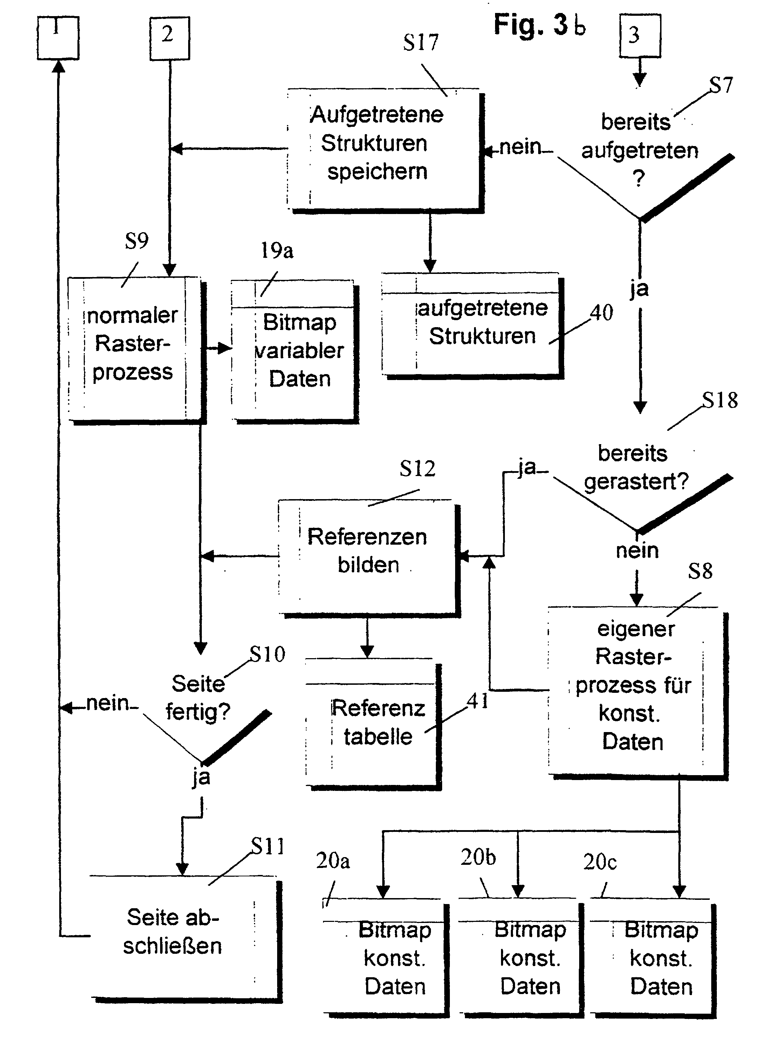

In Figur 3 ist ein Ablaufdiagramm dargestellt, das einen Ablauf zur Analyse von Druckdaten darstellt. In einem ersten Schritt S1 wird jeweils eine Gruppe von Druckdaten aus dem Druckdatenstrom 5 in einen vorgegebenen Bereich des Controllers 6 eingelesen. Der Umfang der Gruppe kann individuell bestimmt werden, wobei eine Druckseite beispielsweise in 2, 5, 10 oder noch mehr Teilbereiche unterteilt sein kann. Die nachfolgende Analyse der Druckdaten erfolgt im sog. CI-Raum (Coded Information Raum). Die Analyse erfolgt dabei so, daß die Auswirkungen der Datenumsetzung auf Pixel-basierter Basis, d.h. im sog. NCI-Raum (Non-Coded Information Raum) berücksichtigt werden. Dazu wird der Druckdatenstrom bzw. die Gruppen der Druckdaten nach gewissen Kategorien auf Formularindikatoren untersucht. Ein erster Formularindikator, der beispielsweise in Druckdatenströmen nach dem IPDS-Format häufig verwendet wird, sind sogenannte Overlay-Daten oder Overlay-Aufrufe. Liegen solche Overlay-Daten oder ein Overlay-Aufruf vor, so ist dies ein Hinweis darauf, daß den Daten ein Formular zugrunde liegt. Die Overlay-Daten bzw. der Overlay-Aufruf werden dann gemäß Schritt S7 weiterverarbeitet, der weiter unten noch näher beschrieben wird. Bei Overlays und Makros wird sinnvollerweise der jeweilige Aufruf ausgewertet, da ein definiertes Overlay oder Makro nicht notwendigerweise auch verwendet wird. Wurde ein Overlay also bereits einmal aufgerufen, so wird bei jedem späteren Aufruf dieses Overlays im Schritt S7 der Status "ja" ausgegeben.

Die Untersuchung der Druckdaten kann relativ restriktiv erfolgen, d.h. Formularindikatoren nur dann als gegeben betrachtet werden, wenn sie relativ eindeutig darauf hinweisen, daß ein Formular vorliegt, d.h. daß die entsprechenden Daten innerhalb eines Druckjobs, der eine Vielzahl von Seiten enthält, mehrmals vorkommen.

Wurde im Schritt S2 kein Overlay festgestellt, so wird im Schritt S3 untersucht, ob in der aktuellen Gruppe von Druckdaten Makro-Informationen vorhanden sind, ggf. wird das jeweilige Makro hinsichtlich typischen Makro-Formularindikatoren im Schritt S13 überprüft. In der Drucksprache PCL werden häufig wiederkehrende Aktionen regelmäßig in Makros abgelegt. Somit ist die Wahrscheinlichkeit, bei der Untersuchung von Makros auf konstante Daten mit Formelcharakter, beispielsweise auf Felder mit grau hinterlegtem Hintergrund zu stoßen. Gegebenenfalls wird im Schritt S6 eine Variable, die den Formelindikator repräsentiert, auf 1 (ja) gesetzt und die entsprechende Druckdatengruppe im Schritt S7 weiterbehandelt.

Wie im Schritt S3 werden Daten, die kein Makro enthalten, auch im Schritt S4 hinsichtlich graphischen Objekten untersucht. Auch hier sind beispielsweise mit Graurastern gefüllte Flächen im Schritt S14 erkennbar und wiederum mit dem Schritt S6 als Formularbestandteil zu kennzeichnen. Insbesondere werden gefüllte Rechtecke meist durch einfach zu erkennende Strukturen in entsprechenden Drucksprachen beschrieben. Auch kleinere Bit-Maps in bestimmten Bereichen, z.B. ein Firmenlogo, auf den Druckseiten können lohnenswerte Objekte sein, die als Formularbestandteil gekennzeichnet werden können.

Ergibt auch Schritt S4 kein Formular-Ergebnis, so kann in einem Schritt S5 geprüft werden, ob in den aktuellen Druckdaten typische, häufig wiederkehrende Textbestandteile vorhanden sind. Bei dieser Prüfung kann u.U. restriktiver vorgegangen werden, wenn die Textdaten zu einem hohen Grad individualisiert sind. Sind jedoch solche Textdaten eindeutig als Formularbestandteile in Schritt S15 ermittelt, so wird auch hier der Schritt S6 zum Schritt S7 führen.

Textobjekte sollten ebenfalls nur in bestimmten Bereichen einer Seite, z.B. in der Fußzeile auf konstante Anteile untersucht werden. Dabei können beispielsweise auch Schriftattribute untersucht werden. Beispielsweise deutet eine Schriftgröße < 10 pt darauf hin, daß eine Information eine Formularinformation ist.

Wurde im Schritt S6 ein Formularindikator entdeckt, so wird im Schritt S7 geprüft, ob diese (im NCI-Raum identische) Struktur bereits früher aufgetreten ist. Wenn diese Bedingung nicht erfüllt ist, so wird im Schritt S17 die aktuell aufgetretene Struktur in einem Strukturspeicher 40 abgespeichert. Die Daten werden sodann im Rahmen des normalen Rasterprozesses im Schritt S9 in der Bit-Map 19a für variable Daten im Rahmen des normalen Rasterprozesses S9 abgelegt.

Wird im Schritt S7 dagegen festgestellt, daß im Speicher 40 bereits eine Struktur gespeichert ist, die den aktuellen Daten entspricht, so wird im Schritt S18 geprüft, ob die konstanten Daten bereits bei einer vorhergehenden Seite aufgerastert wurden und somit schon als Bitmap vorliegen. In diesem Fall können im Schritt S12 direkt Referenzen zwischen den in den Bitmaps 20a, 20b, 20c gespeicherten konstanten Daten und den jeweils zugehörigen variablen Daten gebildet werden. Bei dieser Referenzbildung wird der Speicherort der Bitmaps im Festspeicher 20 und der Ort der Bitmap bezüglich der Druckseite (sog. xy-Position) in einer Referenztabelle 41 festgehalten. Falls die konstanten Daten noch nicht aufgerastert sind, werden diese Daten in einem eigenen Rasterprozeß für konstante Daten im Schritt S8 gerastert und in einer Bit-Map für konstante Daten jeweils separat als Bit-Map 20a, 20b, 20c usw. abgespeichert.

Nachdem die Schritte S18, S8, S9 und S12 abgeschlossen sind, wird im Schritt S10 überprüft, ob die aktuellen Daten ein Seitenende markieren; wenn nicht, werden mit Schritt S1 die nächsten Druckdaten eingelesen. Ist das Seitenende erreicht, so wird im Schritt S11 eine logische Statusvariable auf einen Wert "TRUE" gesetzt.

Beim erstmaligen Auftreten einer Struktur mit Formularindikator wird diese Struktur lediglich im Coded-Format im Strukturspeicher 40 abgespeichert. Durch dieses Verfahren werden nur Strukturen, die wiederholt vorkommen, einer Sonderbehandlung unterworfen. Beim erstmaligen Auftreten einer solchen Struktur werden die entsprechenden Daten zunächst immer als variable Daten interpretiert.

Bei bestimmten Ereignissen bzw. Kommandos innerhalb des Druckdatenstroms (z.B. beim Beginn eines neuen Druckjobs, bei einem Printer-Reset oder dergl.) werden die aufgetretenen Strukturen im Strukturspeicher 40 gelöscht.

Beim wiederholten Auftreten einer im NCI-Raum identischen Struktur wird dieses im Schritt S12 in der Referenztabelle 41 vermerkt.

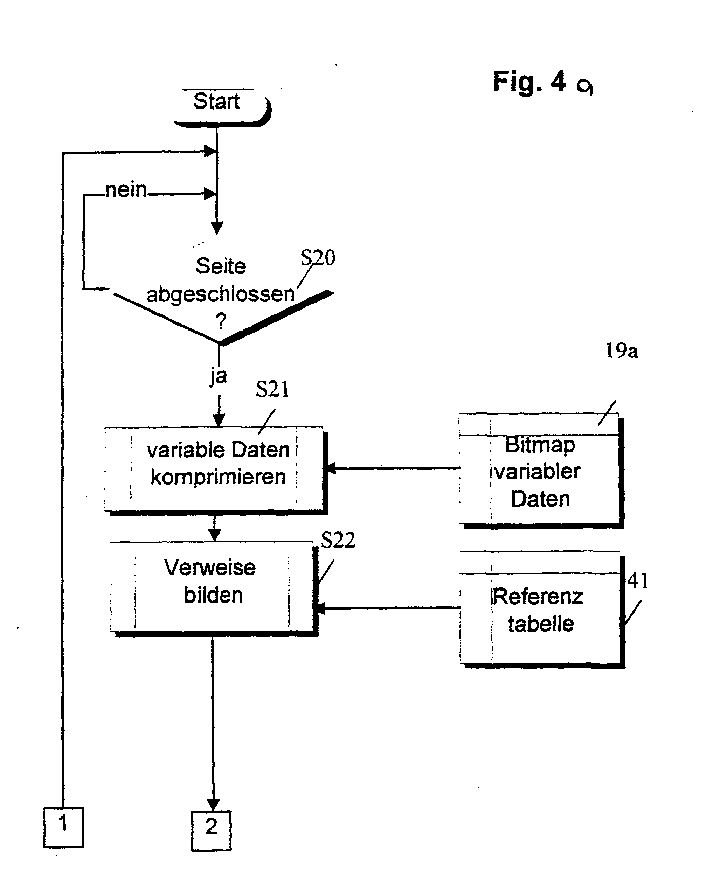

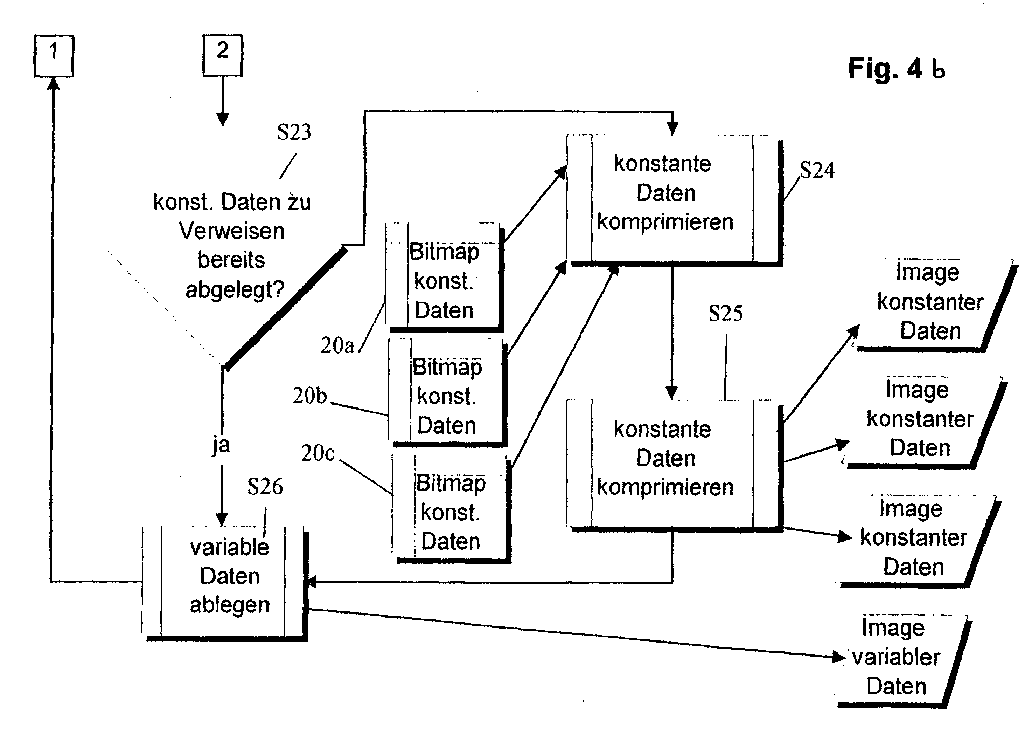

In Figur 4 ist der Ablauf zum Archivieren der zuvor gemäß Figur 3 verarbeiteten Druckdaten beschrieben. Im Schritt S20 wird zunächst geprüft, ob die Seitenende-Statusvariable (vgl. Schritt S11), auf "TRUE" gesetzt ist. Ist diese Bedingung erfüllt, so werden die im Schritt S9 bzw. in Bit-Map 19a gespeicherten, variablen Daten im Schritt S21 komprimiert und danach im Schritt S22 Verweise zu konstanten Daten anhand der Referenztabelle 41 gebildet und abgelegt.

Im Schritt S23 wird dann geprüft, ob zu den in Schritt S22 gebildeten Verweisen bereits konstante Daten im Archivspeicher abgelegt sind. Wenn dies nicht der Fall ist, so werden die entsprechenden konstanten Daten aus den Bit-Maps 20a, 20b, 20c usw. unter Verwendung der Referenztabelle 41 im Schritt S24 komprimiert und die komprimierten Daten im Schritt S25 im Archivspeicher abgelegt.

Wird dagegen im Schritt S23 festgestellt, daß im Archivspeicher bereits entsprechende Daten komprimiert abgelegt sind, so werden im Schritt S26 nur noch die aktuellen variablen Daten komprimiert und im Archivspeicher abgelegt. Danach wird im Schritt S20 der nächste Datensatz behandelt, bis alle ankommenden Daten verarbeitet sind.

Die variablen Daten werden in einem separaten Speicher aufgerastert und komprimiert. Beim Abspeichern der variablen Daten werden die Verweise, insbesondere diejenigen auf den XY-Offset innerhalb der Seite sowie diejenigen auf den Speicherort, der auf der Seite enthaltenen konstanten Daten hinzugefügt.

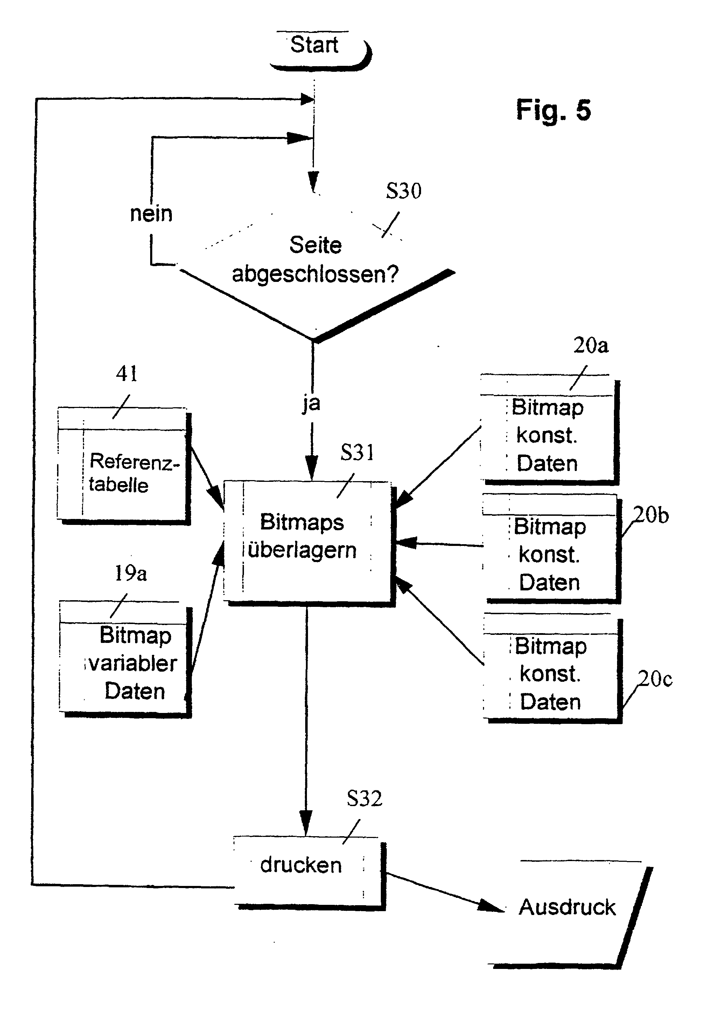

In Figur 5 ist der Prozeß zum Druckern der gemäß Figur 3 verarbeiteten Daten dargestellt. Im Schritt S30 wird wiederum überprüft, ob alle Daten einer Seite abgearbeitet sind, d.h. ob in Schritt S11 von Figur 3 die Variable zum Seitenabschluß auf "TRUE" gesetzt ist. Ist dies der Fall, so kann zum Drucken in Schritt S31 die in Speicher 19 gespeicherte Bit-Map 19a der variablen Daten einer Seite mit den entsprechenden Bit-Maps 20a, 20b, 20c der konstanten Daten der zugehörigen Seite anhand der Referenztabelle 41 überlagert werden. Dies kann beispielsweise durch eine logische "ODER"-Operation zwischen dem entsprechenden Bit-Map geschehen. Anschließend kann in Schritt S32 der Druckvorgang gestartet werden.

Ausgehend von dem in Figur 3 dargestellten Verfahren zur Untersuchung der Daten können die Prozesse der Figuren 4 und 5, d.h. Archivieren und Drucken, parallel erfolgen.

Es wurden Ausführungsbeispiele der Erfindung beschrieben. Dabei ist klar, daß ohne weiteres Abwandlungen und Weiterentwicklungen der Erfindung angegeben werden können. Beispielsweise kann in einem Druck- und Archiviersystem vorgesehen sein, daß der Anwender bzw. das Anwendungsprogramm bereits beim Erzeugen des Datenstroms immer wiederkehrende Daten (Formulardaten) mit besonderen Kennzeichnungen versieht, (z.B. durch eine entsprechende Steuerinformation) und daß diese Kennzeichnungen im späteren Archivier- bzw. Druckvorgang entsprechend ausgewertet werden. Ähnlich wie bei der Overlay-Information kann damit eine sichere Entscheidung getroffen werden, daß bestimmte Daten Formulardaten sind.

Es kann auch vorteilhaft sein, im Datenaufbereitungsprozeß (Fig. 3) nach dem Rastern der konstanten Daten im Schritt S8 gleich die Schritte S24 und S25 durchzuführen und die konstanten Daten im Archivspeicher abzulegen. Hierzu müssen aber die Ablagearten der Daten frühzeitig bekannt sein.

## Patentansprüche

1. Verfahren zur elektronischen Archivierung des von einem Computer (2) in einem druckerspezifischen Datenformat (IPDS, PCL) abgegebenen Datenstroms (5), der grafische und/oder Textinformationen enthält, wobei der Datenstrom(5) von dem druckerspezifischen Datenformat (IPDS, PCL) in ein auf Pixel basierendes Datenformat (Bit Map, TIF) umgesetzt wird, **dadurch gekennzeichnet, daß** bei dem umgesetzten, auf Pixel basierenden Datenstrom (5) Formular-Daten (8) von variablen Daten (9) unterschieden werden und daß diese beiden Datenarten (8, 9) jeweils unterschiedlich verarbeitet werden.

2. Verfahren nach Anspruch 1, **dadurch gekennzeichnet, daß** den variablen Daten (9) Verweise zu den Formulardaten (8) zugeordnet werden.

3. Verfahren nach Anspruch 1 oder 2, **dadurch gekennzeichnet, daß** innerhalb einer vorgegebenen Datengruppe (Job) ein Formular-Datensatz gleichartiger Formulardaten nur einmal abgespeichert wird, während die zugeordneten variablen Daten aller Datensätze der Datengruppe (Job) jeweils alle gespeichert werden.

4. Verfahren nach einem der Ansprüche 1 bis 3, **dadurch gekennzeichnet, daß** eine Unterscheidung zwischen Formulardaten (8) und variablen Daten (9) im druckerspezifischen Datenformat erfolgt.

5. Verfahren nach Anspruch 4, **dadurch gekennzeichnet, daß** im Datenstrom (5) Formularindikatoren zur Erkennung von Formular-Daten (8) gesucht werden.

6. Verfahren nach Anspruch 4 oder 5, **dadurch gekennzeichnet, daß** die Daten des Datenstroms (5) gruppenweise zunächst auf Formularindikatoren untersucht werden und nur bei wiederholtem Auftreten von Formulardaten (8) die Zuordnung zwischen den variablen Daten (9) und den Formulardaten (8) erfolgt.

7. Verfahren nach Anspruch 6, **dadurch gekennzeichnet, daß** als Formularindikatoren Overlay-Informationen, besondere Steuerinformationen, Makro-Informationen, graphische Informationen, vorgegebene Textbausteine und/oder vorgegebene Textattribute verwendet werden.

8. Verfahren nach einem der Ansprüche 4 bis 7, **dadurch gekennzeichnet, daß** ein Formular-Datensatz nach dem ersten Auftreten innerhalb der vorgegebenen Datengruppe (Job) des Druckdatenstroms (5) abgespeichert wird und erst nach wiederholtem, insbesondere zweitem Auftreten als Formulardatensatz markiert, in eine Formular-Bit-Map (20a, 20b, 20c) umgesetzt und dem zugehörigen variablen Datensatz (9) zugeordnet wird.

9. Verfahren nach einem der vorhergehenden Ansprüche, **dadurch gekennzeichnet, daß** innerhalb eines Arbeitsablaufes wahlweise entweder gedruckt oder archiviert, oder gleichzeitig gedruckt und archiviert wird.

10. Verfahren nach einem der vorhergehenden Ansprüche, **dadurch gekennzeichnet, daß** die Formulardaten im Archivspeicher (3) nicht abgespeichert werden.

11. Verfahren nach einem der vorhergehenden Ansprüche, **dadurch gekennzeichnet, daß** das ursprüngliche Pixelbild aus den Formular-Daten (8) und den variablen Daten (9) rekonstruiert wird.

12. Verfahren nach einem der vorhergehenden Ansprüche, **dadurch gekennzeichnet, daß** unter Verwendung der Verweise eine Überlagerung der Formular-Daten (8) und der variablen Daten (9) erfolgt.

13. Verfahren nach einem der vorhergehenden Ansprüche, **dadurch gekennzeichnet, daß** ein Index-Datensatz erzeugt wird.

14. Verfahren nach einem der vorhergehenden Ansprüche, **dadurch gekennzeichnet, daß** der Index-Datensatz einen Verweis auf die variablen Daten (9), insbesondere auf die Formular-Daten (8), enthält.

15. Gerät zur elektronischen Archivierung des von einem Computer einem druckerspezifischen Datenformat (IPDS, PCL) abgegebenen Datenstroms (5), der grafische und/oder Textinformationen enthält, wobei der Druckdatenstrom (5) von dem druckerspezifischen Datenformat (IPDS, PCL) in ein auf Pixel basierendes Datenformat (Bit Map, TIF) umgesetzt wird, **dadurch gekennzeichnet, daß** eine Archivierungs-Schnittstelle (1) vorgesehen ist, die im auf Pixel basierenden Datenformat (Bit Map, TIF) Formular-Daten (8) und variable Daten (9) unterschiedlich verarbeitet.

16. Gerät nach Anspruch 15, **gekennzeichnet durch** einen Drucker-Controller (6), der über eine Schnittstelle variable Daten (9), Formular-Daten (8) und Index-Daten (10) an einen Weiterverarbeitungscomputer (PC) übergibt.

17. Gerät nach Anspruch 16, bei dem die Verarbeitungseinheiten des Weiterverarbeitungscomputers (PC) in den Drucker-Controller integriert sind.

18. Gerät nach Anspruch 15 bis 17, **dadurch gekennzeichnet, daß** in der Archivierungs-Schnittstelle (1) Formular-Daten (8) und variablen Daten (9) unterschieden werden.

19. Gerät nach einem der Ansprüche 15 bis 18 **dadurch gekennzeichnet, daß** zur Unterscheidung zwischen Formulardaten (8) und variablen Daten (9) der Datenstrom (5) im druckerspezifischen Datenformat untersucht wird.

## Claims

1. Method for the electronic archiving of the data stream (5) output by a computer (2) in a printer-specific data format (IPDS, PCL) and containing graphic and/or text information, the data stream (5) being converted from the printer-specific data format (IPDS, PCL) into a data format based on pixels (Bitmap, TIF), **characterized in that** form data (8) are distinguished from variable data (9) in the converted data stream (5) based on pixels, and that these two data types (8, 9) are respectively differently processed.

2. Method according to claim 1, **characterized in that** references to the form data (8) are allocated to the variable data (9).

3. Method according to claim 1 or 2, **characterized in that** a form data set of identical form data is stored only once within a predetermined data group (job), whereas the allocated variable data of all data sets of the data group (job) are all respectively stored.

4. Method according to one of the claims 1 to 3, **characterized in that** a distinction between form data (8) and variable data (9) takes place in the printer-specific data format.

5. Method according to claim 4, **characterized in that** form indicators for recognizing form data (8) are sought in the data stream (5).

6. Method according to claim 4 or 5, **characterized in that** the data of the data stream (5) are first investigated in groups for form indicators, and the allocation between the variable data (9) and the form data (8) only takes place in the case of repeated occurrence of form data (8).

7. Method according to claim 6, **characterized in that** overlay information, particular control information, macro information, graphic information, predetermined text modules and/or predetermined text attributes are employed as form indicators.

8. Method according to one of the claims 4 to 7, **characterized in that** a form data set is stored after the first occurrence within the predetermined data group (job) of the print data stream (5) and is only marked as form data set, converted into a form bitmap (20a, 20b, 20c) and allocated to the appertaining variable data set (9) after a repeated, particularly a second occurrence.

9. Method according to one of the preceding claims, **characterized in that**, within an operational sequence, either printing or archiving is optionally implemented or printing and archiving are simultaneously implemented.

10. Method according to one of the preceding claims, **characterized in that** the form data are not stored in the archive storage (3).

11. Method according to one of the preceding claims, **characterized in that** the original pixel image is reconstructed from the form data (8) and the variable data (9).

12. Method according to one of the preceding claims, **characterized in that** a superimposition of the form data (8) and the variable data (9) takes place by using the references.

13. Method according to one of the preceding claims, **characterized in that** an index data set is generated.

14. Method according to one of the preceding claims, **characterized in that** the index data set contains a reference to the variable data (9), particularly to the form data (8).

15. Apparatus for electronic archiving of the data stream (5) output by a computer in a printer-specific data format (IPDS, PCL) and containing graphic and/or text information, the print data stream (5) being converted from the printer-specific data format (IPDS, PCL) into a data format based on pixels (Bitmap, TIF), **characterized in that** an archiving interface (1) is provided that differently processes form data (8) and variable data (9) in the data format based on pixels (Bitmap, TIF).

16. Apparatus according to claim 15, **characterized by** a printer controller (6) that transfers variable data (9), form data (8) and index data (10) to a further-processing computer (PC) via an interface.

17. Apparatus according to claim 16, wherein the processing units of the further-processing computer (PC) are integrated in the printer controller.

18. Apparatus according to claim 15 to 17, **characterized in that** a distinction is made between form data (8) and variable data (9) in the archiving interface (1).

19. Apparatus according to one of the claims 15 to 18, **characterized in that** the data stream (5) is investigated in the printer-specific data format for distinguishing between form data (8) and variable data (9).

## Revendications

1. Procédé d'archivage électronique du flux de données (5) qui est délivré par un ordinateur (2) dans un format de données (IPDS, PCL) spécifique à un appareil d'impression et qui contient des informations textuelles et/ou graphiques, dans lequel le flux de données (5) est converti du format de données (IPDS, PCL) spécifique à un appareil d'impression en un format de données (Bitmap, TIF) fondé sur des pixels, **caractérisé en ce que**, une fois que le flux de données (5) fondé sur des pixels a été converti, des données de formulaire (8) sont différenciées des données variables (9), et **en ce que** ces deux types de données (8, 9), sont respectivement traités différemment.

2. Procédé selon la revendication 1, **caractérisé en ce que** des références à des données de formulaire (8) sont associées aux données variables (9).

3. Procédé selon la revendication 1 ou 2, **caractérisé en ce qu'**un ensemble de données de formulaire de même type n'est mémorisé qu'une seule fois à l'intérieur d'un groupe de données prédéterminé (tâche), tandis que les données variables associées du groupe de données (tâche) sont respectivement toutes mémorisées.

4. Procédé selon l'une des revendications 1 à 3, **caractérisé en ce qu'**une différenciation entre des données de formulaire (8) et des données variables (9) est effectuée dans le format de données spécifique à un appareil d'impression.

5. Procédé selon la revendication 4, **caractérisé en ce que** des indicateurs de formulaire destinés à la reconnaissance de données de formulaire (8) sont recherchés dans le flux de données (5).

6. Procédé selon la revendication 4 ou 5, **caractérisé en ce que** les données du flux de données (5) sont tout d'abord analysées par groupes en vue de trouver des indicateurs de données, et l'association entre les données variables (9) et les données de formulaire (8) n'est effectuée que lors d'une occurrence répétée de données de formulaire (8).

7. Procédé selon la revendication 6, **caractérisé en ce qu'**il est utilisé, comme indicateurs de formulaire, des informations de recouvrement, en particulier des informations de commande, des informations macros, des informations graphiques, des modules textuels prédéterminés et/ou des attributs textuels prédéterminés.

8. Procédé selon l'une des revendications 4 à 7, **caractérisé en ce qu'**un ensemble de données de formulaire est mémorisé après la première occurrence à l'intérieur du groupe de données prédéterminé (tâche) du flux de données d'impression (5), et, seulement après une occurrence répétée, en particulier une deuxième occurrence, ledit ensemble est marqué comme étant un ensemble de données de formulaire, converti en un bitmap de formulaire (20a, 20b, 20c) et associé à l'ensemble variable (9) auquel il est lié.

9. Procédé selon l'une des revendications précédentes, **caractérisé en ce que** l'on réalise au choix l'impression ou l'archivage, ou simultanément l'impression et l'archivage, dans un processus opératoire.

10. Procédé selon l'une des revendications précédentes, **caractérisé en ce que** les données de formulaire ne sont pas mémorisées dans la mémoire d'archivage (3).

11. Procédé selon l'une des revendications précédentes, **caractérisé en ce que** l'image en pixels d'origine est reconstruite à partir des données de formulaire (8) et des données variables (9).

12. Procédé selon l'une des revendications précédentes, **caractérisé en ce qu'**une superposition des données de formulaire (8) et des données variables (9) est effectuée en utilisant les références.

13. Procédé selon l'une des revendications précédentes, **caractérisé en ce qu'**il est généré un ensemble de données d'index.

14. Procédé selon l'une des revendications précédentes, **caractérisé en ce que** l'ensemble de données d'index contient une référence aux données variables (9), en particulier aux données de formulaire (8).

15. Appareil d'archivage électronique du flux de données (5) qui est délivré par un ordinateur dans un format de données (IPDS, PCL) spécifique à un appareil d'impression et qui contient des informations textuelles et/ou graphiques, dans lequel le flux de données (5) est converti du format de données (IPDS, PCL) spécifique à un appareil d'impression en un format de données (Bitmap, TIF) fondé sur des pixels, **caractérisé en ce qu'**il est prévu une interface d'archivage (1) qui traite différemment des données de formulaire (8) et des données variables (9) dans le format de données (Bitmap, TIF) fondé sur des pixels.

16. Appareil selon la revendication 15,
**caractérisé par** un organe de commande d'appareil d'impression (6) qui transfère, via une interface, des données variables (9), des données de formulaire (8), et des données d'index (10), à un ordinateur de post-traitement (PC).

17. Appareil selon la revendication 16, dans lequel les unités de traitement de l'ordinateur de post-traitement (PC) sont intégrées dans l'organe de commande d'appareil d'impression.

18. Appareil selon l'une des revendications 15 à 17, **caractérisé en ce que** les données de formulaire (8) et les données variables (9) sont différenciées dans l'interface d'archivage (1).

19. Appareil selon l'une des revendications 15 à 18, **caractérisé en ce que** le flux de données (5) dans le format de données spécifique à un appareil d'impression est analysé en vue de différencier les données de formulaire (8) des données variables (9).
